# EUROPÄISCHE PATENTANMELDUNG

(11) **EP 1 128 528 A2**
(43) Veröffentlichungstag der Anmeldung: **29.08.2001**
(21) Anmeldenummer: 01102477.5
(22) Anmeldetag: 03.02.2001
(51) Int. Cl.: H02K 5/128

(54) **Rückwand des Motorgehäuses einer Spaltrohrpumpe**

(30) Priorität: 22.02.2000 DE 10008079
(71) Anmelder: WILO GmbH, D-44263 Dortmund (DE)
(72) Erfinder: Dieckmann, Michael, 44319 Dortmund (DE)
(74) Vertreter: COHAUSZ HANNIG DAWIDOWICZ & PARTNER

(57) **Zusammenfassung**

Elektromotor zum Antrieb einer Naßläuferpumpe, wobei zwischen dem Rotor und dem Stator ein Spalttopf angeordnet ist, der vermittels einer Aufnahme an der Innenseite der Rückwand eines den Rotor und den Stator umgebenden Motorgehäuses gehalten ist, wobei die Aufnahme 12 auf der dem Spalttopf 3 abgewandten Seite von der Rückwand des Motorgehäuses 14 verschlossen ist und wobei die Aufnahme 12 Mittel aufweist, die den Spalttopf 3 in radialer Richtung formschlüssig und in axialer Richtung kraftschlüssig halten.

## Beschreibung

Die vorliegende Erfindung betrifft einen Elektromotor zum Antrieb einer Naßläuferpumpe, wobei zwischen dem Rotor und dem Stator ein Spalttopf angeordnet ist, der vermittels einer Aufnahme an der Innenseite der Rückwand eines den Rotor und den Stator umgebenden Motorgehäuses gehalten ist.

Die Spalttöpfe derartiger Naßläferpumpen sind am Motorgehäuse meist in einer Aufnahme gehalten, die von einer zentral angeordneten und nach innen gerichteten Buchse gebildet wird. In diese Aufnahme, die von der dem Laufrad abgewandten Rückseite des Motors zur Montage der Komponenten zugänglich ist, wird der Spalttopf eingesteckt. Dabei liegt die Rückseite des Spalttopfes vermittels einer Dichtung an der Aufnahme an, um das Eindringen von Feuchtigkeit in den Statorraum zu verhindern. Der axiale Halt des Spalttopfes wird durch einen Sicherungsring gewährleistet, der bei eingestecktem Spalttopf von der offenen Rückseite des Gehäuses her auf den Spalttopf aufgeschoben wird und der sich an einer Außenfläche der Aufnahme gegen axiale Verscshiebung abstützt. Die Außenfläche ist eine unbearbeitete Fläche, die von dem im Druckgußverfahren hergestellten Motorgehäuse gebildet wird. Nach der Montage des Spalttopfes wird die zur Rückseite hin offene Aufnahme durch eine abnehmbare Kappe verschlossen.

Nachteilig an dem bekannten Elektromotor mit der beschriebenen Aufnahme ist, daß eine exakte Zentrierung des Spalttopfes innerhalb des Motorgehäuses vermittels der Gummidichtung und über den an der unbearbeiteten Sitzfläche anliegenden Sicherungsring nicht möglich ist. So kann es bei der Montage des Spalttopfes zu Verspannungen und zum Auftreten radial ausgerichteter Kräften kommen, die direkt auf die im Spalttopf angeordneten Gleitlager wirken. Durch diese radialen Kräfte treten zwischen den beiden Gleitlagern, in denen die Motorwelle läuft, Fluchtungsfehler auf, die zu einer Kantenbelastung der Lager führen und die zu einem starken Verschleiß der Lager beitragen. Dies kann zu einem frühzeitigen Ausfall der Pumpe führen.

Zudem ist an den bekannten Elektromotoren nachteilig, daß eine große Anzahl von Bauteilen sowie mehrere Montageschritte notwendig sind, um den Spalttopf innerhalb des Gehäuses zu montieren. Die Vielzahl der Bauteile sowie die aufwendige Montage belasten einerseits die Herstellungskosten und mindern andererseits die Zuverlässigkeit derartiger für den Antrieb von Pumpen vorgesehener Elektromotoren.

Aufgabe der Erfindung ist es daher, einen Elektromotor zum Antrieb einer Naßläuferpumpe mit einem Motorgehäuse zu schaffen, das den Spalttopf bei vergleichsweise exakter Zentrierung und einfacher Montage sicher hält und das dem Spalttopf eine hohe Sicherheit gegen von außen wirkende Fremdeinflüsse bietet.

Diese Aufgabe wird durch einen Elektromotor mit den kennzeichnenden Merkmalen des Anspruchs 1 gelöst.

Einer der wesentlichen Aspekte der Erfindung ist, daß es nun möglich ist, die Rückseite des Motorgehäuses von der Rückseite vollständig zu verschließen, und daß die Montage und die Sicherung des Spalttopfes durch alleiniges Einstecken des Spalttopfes von vorne ohne ein zusätzliches Aufschieben eines Sicherungsringes ermöglicht wird. Die Sicherung des Spalttopfes gegen axiale Verschiebung wird allein durch die Ausgestaltung der erfindungsgemäßen Aufnahme ermöglicht. Dazu ist die Aufnahme als einseitig geöffnete Hülse äusgebildet, in die der Spalttopf eingesteckt wird, wobei die Aufnahme selber Rückhaltemittel aufweist, über die der eingesteckte Spalttopf gegenüber axialer Verschiebung gesichert ist. Da die Hülse selber die Haltemittel aufweist kann auf die Montage eines zusätzlichen Sicherungsringes verzichtet werden. Die von hinten geschlossene Aufnahme bietet eine Reihe von Vorteilen.

Ein wesentlicher Vorteil der geschlossenen Aufnahme ist, daß so die Möglichkeit besteht, das gesamte Motorgehäuses zu verschließen und damit sämtliche eingebauten Komponenten vor äußeren Einflüsse zu schützen. So kann auf eine zusätzliche Abdichtung zwischen dem Spalttopf und der Aufnahme verzichtet werden, da der Innenraum des Motorgehäuses durch die geschlossene Rückwand gegen den Eintritt von Spritzwasser, das sich im Umgang mit Pumpen nicht vermeiden läßt, geschützt ist. Ein rundherum geschlossenes Motorgehäuse bietet den beinhalteten Motorkomponenten den größtmöglichen Schutz gegenüber äußeren Einflüssen. Gleichzeitig bedingt das geschlossene Motorgehäuse insofern eine Kostenersparnis, als auf die bislang benötigte Gummidichtung, den aus Federstahl gefertigten Sicherungsring und die die rückwärtige Öffnung verschließende Kappe verzichtet werden kann. Die Reduzierung der Bauteile bringt außerdem eine zusätzliche Erhöhung der Betriebssicherheit des Motors.

Besonders vorteilhaft ist es, wenn das Motorgehäuse des erfindungsgemäßen Elektromotors aus Metall gefertigt, insbesondere aus Metall gegossen, ist. Dabei ist Aluminium-Druckguß wegen des vergleichsweise geringen Gewichtes, der hohen Stabilität und der einfachen Fertigung zu bevorzugen. Solche Druckgußgehäuse sind aus dem Bereich der Heizungs-Umwälzpumpen bekannt.

Im Hinblick auf das erfindungsgemäße Motorgehäuses ist es vorteilhaft, dieses als nahezu zylindrischen Topf auszubilden, in den die einzelnen Bauteile des Stators und des Rotors einsetzbar sind. Dabei kann der Boden des als Topf ausgebildeten Motorgehäuses, wie dargelegt, vollständig geschlossen sein, um die Bauteile vor äußeren Einflüssen zu schützen. Die Aufnahme kann dabei vorteilhafterweise als einfache zylindrische Hülse ausgebildet sein, die an die Innenseite des Bodens koaxial zur Motorwelle angeformt ist. In diese Hülse wird dann der Spalttopf eingesetzt, wobei der Spalttopf vorteilhafterweise an seinem Boden zu einer das Gleitlager der Welle aufnehmenden Hülse verjüngt ist.

Ein weiterer wesentlicher Aspekt der Erfindung ist nunmehr, daß die hülsenförmige Aufnahme, die von dem Druckgußgehäuse geformt ist, nachträglich, insbesondere durch Ausdrehen, bearbeitet ist, um die beim Gießen aufgetretenen Toleranzen auszugleichen und um eine definierte Anlage für den Spalttopf zu schaffen. Dazu wird in die Aufnahme ein ringförmiger Sitz eingedreht, in den der Spalttopf selber oder vermittels eines Halteringes einpressbar ist. Der besondere Vorteil an dem nachbearbeiteten Sitz, der eine Toleranz von wenigen Hundertstel Millimeter aufweist, ist, daß ein spannungsfreier Einbau des Spalttopfes, insbesondere bezüglich radial wirkender Kräfte, möglich ist. Im Gegensatz zu den aus dem Stand der Technik bekannten Sicherungsringen, die gegen unbearbeitete Flächen des Druckgußgehäuses anlagen, ist durch das erfindungsgemäße Motorgehäuse mit dem bearbeiteten Sitz ein definierter Einbau des Spalttopfes und damit eine bessere Fluchtung der Gleitlager gegeben. Daraus resultieren entsprechend geringe Winkelfehler, so daß ein Kantenlauf der Gleitlager nahezu vollständig vermieden wird. Dabei ist vorteilhaft, daß die Bearbeitung des gesamten Motorgehäuses von nur einer Seite, nämlich von Seiten der Öffnung, vorgenommen werden kann. Die Zuverlässigkeit des Aggregates kann durch den bearbeiteten Sitz erheblich gesteigert werden.

In einer weiteren vorteilhaften Ausführungsform ist der Spalttopf nicht direkt, sondern vermittels eines in den Sitz eingepreßten Halteringes in die Aufnahme eingesteckt, wobei der Haltering mit seiner äußeren Wandung an der bearbeiteten Fläche anliegt und den Spalttopf in axialer Richtung kraftschlüssig und in radialer Richtung formschlüssig hält. Dabei gewährleistet der kraftschlüssige Halt eine Toleranz der Gleitlager gegenüber einem geringen Axialversatz, der durch Druckbeaufschlagung auf das Lagerschild hervorgerufen werden kann. Besonders vorteilhaft ist es, den Sicherungsring aus einem temperaturbeständigen Kunststoff, insbesondere aus einem mineralverstärkten und hizebeständigen Polyamid (PA) herzustellen. Ein derartiger Haltering weist eine hohe Wärmebeständigkeit in Temperaturbereichen bis zu 140° C auf. Außerdem tragen derartige Halte ringe zu einer Dämpfung der Lager bei. Sie zeichnen sich durch geringe Herstellungskosten aus und neigen trotz der hohen Druckbeanspruchung kaum zum Fließen.

In einer besonderen Ausführungsform weist der Haltering drei nach innen gerichtete Noppen auf, die dem Spalttopf zur Anlage dienen. Durch die drei Noppen wird der Spalttopf in der Aufnahme exakt zentriert. Ein wesentlicher Aspekt des Halteringes ist dabei, daß er den eingesteckten Spalttopf auch bei nicht montiertem Motor gegen Herausfallen sichert.

In einer besonders vorteilhaften Ausführungsform weist die Aufnahme ein Begrenzungsmittel, beispielsweise in Form eines am Boden angebrachten querverlaufenden Steges auf, das die Bewegung des Spalttopfes in axialer Richtung gegen den Boden des Motorgehäuses begrenzt. Diese Begrenzungsmittel sind so ausgelegt, daß eine axiale Bewegung des Spalttopfes zur Kompensation von Druckunterschieden in gewissem Umfang, beispielsweise innerhalb eines Millimeters, möglich ist.

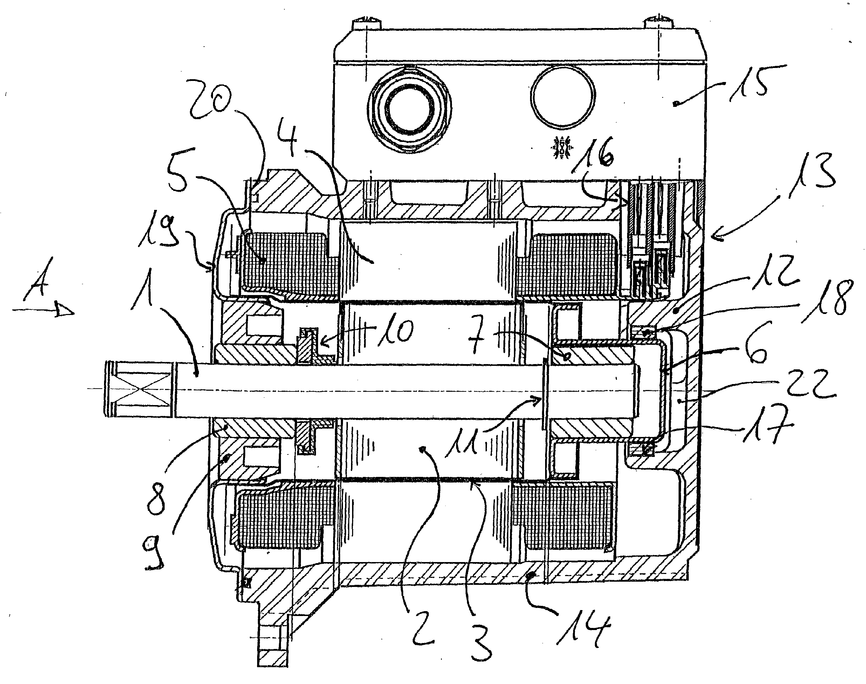

Eine Ausführungsform der Erfindung wird im folgenden anhand der Figur näher beschrieben.

Die Figur zeigt einen Elektromotor zum Antrieb einer Naßläuferpumpe, insbesondere einer Heizungsumwälzpumpe, an dessen vorderen Ende der Welle 1 ein nicht dargestelltes Laufrad angebracht ist. Der Elektromotor weist ein Rotorpaket 2 auf, das die Welle 1 zylindrisch umgibt. Welle 1 mit Rotorpaket 2 sind innerhalb eines Spalttopfes 3 drehbar gelagert. Außerhalb des Spalttopfes 3 ist der Stator 4 mit seinen Statorwickelköpfen 5 angeordnet. Der Spalttopf 3 weist an seinem hinteren, dem Laufrad abgewandten Ende eine angeformte Hülse 6 auf, in die ein die Welle 1 aufnehmendes Gleitlager 7 eingepreßt ist. An der Vorderseite des Elektromotors wird die Welle 1 in einem radialen Gleitlager 8 gehalten, das in einem Lagerträger 9 einsitzt. Die axiale Verschiebung der Welle 1 wird einerseits durch ein Axiallager 10 und andererseits durch einen auf der Welle 1 aufgebrachten Sicherungsring 11 begrenzt.

Die Hülse 6 ist in einer zylindrischen Aufnahme 12 gehalten, die an die Rückwand 13 des Motorgehäuses 14 angeformt ist. Das Motorgehäuse 14 selber ist mit einer geschlossenen Rückwand 13 als Topf ausgebildet und trägt an seiner Außenseite einen Klemmenkasten 15, der über Steckkontakte 16 mit der Statorwicklung 5 kontaktiert ist. Die Aufnahme 12 ist rückseitig durch die Rückwand 13 des Motorgehäuses 14 wasserdicht verschlossen.

In die Innenwand der Aufnahme 12 ist eine zur Welle 1 koaxiale Ringfläche 17 eingedreht. In diesen durch die Ringfläche 17 gebildeten Sitz ist ein aus Kunststoff gefertigter Haltering 18 eingepreßt, in den die Hülse 6 des Spalttopfes 3 einschiebbar ist und der den Spalttopf kraftschlüssig gegen axiale Verschiebung hält.

Bei der Montage wird nunmehr zunächst die Welle 1 mit dem Rotorpaket 2 in den Spalttopf 3 eingesetzt und dieser dann von vorne mit dem Lagerträger 9 und den eingesetzten Lagern 8 verschlossen. Der komplette Spalttopf 3 wird dann von vorne in Pfeilrichtung A in das topfförmige Motorgehäuse 14 eingeführt, bis der Lagerschild 19 am Außenflansch 20 des Motorgehäuses zur Anlage kommt. Am Boden der Aufnahme 12 ist ein Begrenzungssteg 22 vorgesehen, der die axiale Bewegung des Spalttopfes 3 begrenzt.

## Patentansprüche

1. Elektromotor zum Antrieb einer Naßläuferpumpe, wobei zwischen dem Rotor und dem Stator ein Spalttopf angeordnet ist, der vermittels einer Aufnahme an der Innenseite der Rückwand eines den Rotor und den Stator umgebenden Motorgehäuses gehalten ist,
**dadurch gekennzeichnet,** daß die Aufnahme (12) auf der dem Spalttopf (3) abgewandten Seite von der Rückwand des Motorgehäuses (14) verschlossen ist, wobei die Aufnahme (12) Mittel aufweist, die den Spalttopf (3) in radialer Richtung formschlüssig und in axialer Richtung kraftschlüssig halten.

2. Elektromotor nach Anspruch 1,
**dadurch gekennzeichnet,** daß das Motorgehäuse (14) aus Metall, insbesondere aus Aluminium-Druckguß, gefertigt ist.

3. Elektromotor nach Anspruch 1 oder 2,
**dadurch gekennzeichnet**, daß das Motorgehäuse (14) von einem nahezu zylindrischen Topf gebildet ist, dessen die Rückwand (13) bildender Boden vollständig geschlossen ist.

4. Elektromotor nach Anspruch 3,
**dadurch gekennzeichnet,** daß die Aufnahme (12) eine koaxial zur Motorwelle (1) an die Innenseite der Rückwand angeformte zylindrische Hülse ist.

5. Elektromotor nach einem der vorherigen Ansprüche,
**dadurch gekennzeichnet,** daß die Aufnahme (12) eine nachträglich bearbeitete, insbesondere eine abgedrehte, ringförmige Sitzfläche (17) aufweist, an der der Spalttopf (3) mit seiner Außenwand mittelbar oder unmittelbar anliegt.

6. Elektromotor nach einem der vorherigen Ansprüche,
**dadurch gekennzeichnet,** daß der Spalttopf (3) vermittels eines in den Sitz eingesetzten, insbesondere eingepreßten Halteringes (18) mittelbar in der Aufnahme (12) einsteckt ist, wobei der Haltering (18) den Spalttopf (3) in axialer Richtung kraftschlüssig und in radialer Richtung formschlüssig hält.

7. Elektromotor nach Anspruch 6,
**dadurch gekennzeichnet,** daß der Haltering (18) aus Kunststoff, insbesondere aus einem Polyamid (PA), gefertigt ist.

8. Elektromotor nach Anspruch 6 oder 7,
**dadurch gekennzeichnet,** daß der Haltering (18) drei nach Innen gerichtete Noppen aufweist, die am Außenumfang des Spalttopfes (3) zur Anlage kommen.

9. Elektromotor nach einem der vorherigen Ansprüche,
**dadurch gekennzeichnet,** daß der Spalttopf (3) eine ein Gleitlager (7) der Welle (1) aufnehmende Hülse aufweist, die an den Boden des Spalttopfes angeformt ist und die insbesondere vermittels des Halteringes (18) in der Aufnahme (12) einsitzt.

10. Elektromotor nach einem der vorherigen Ansprüche,
**dadurch gekennzeichnet,** daß in der Aufnahme (12) ein Begrenzungsmittel (22) vorgesehen ist, das eine Bewegung des Spalttopfes (3) in axialer Richtung gegen den Boden des Motorgehäuses (14) begrenzt.
